# EUROPÄISCHE PATENTANMELDUNG

(11) **EP 1 013 628 A2**
(43) Veröffentlichungstag der Anmeldung: **28.06.2000**
(21) Anmeldenummer: 99125345.1
(22) Anmeldetag: 21.12.1999
(51) Int. Cl.: C04B 41/86, C03C 8/14

(54) **Modifizierte Engobe mit Perlglanzeffekt**

(30) Priorität: 22.12.1998 DE 19859420
(71) Anmelder: MERCK PATENT GmbH, 64293 Darmstadt (DE)
(72) Erfinder: Hechler, Wolfgang, 64686 Lautertal (DE); Weitzel, Joachim, 64293 Darmstadt (DE)

(57) **Zusammenfassung**

Die vorliegende Erfindung betrifft eine modifizierte Engobe mit Perlglanzeffekt für Ziegel, Ton- und Keramikwaren, die sich dadurch auszeichnet, daß sie eine Fritte im Brennbereich von 600-1200 °C ein oder mehrere temperaturstabile Perlglanzpigmente enthält.

## Beschreibung

Die vorliegende Erfindung betrifft eine modifizierte Engobe mit Perlglanzeffekt für Ziegel, Ton- und Keramikwaren, die sich dadurch auszeichnet, daß sie eine Fritte im Brennbereich von 600-1200 °C und ein oder mehrere temperaturstabile Perlglanzpigmente enthält.

Die Beschichtung von Ton- und Keramikwaren zur Verbesserung der Oberfläche durch Feinheit oder Farbe erfolgt üblicherweise mit Engoben.

Keramische Überzugsmassen, die für die Herstellung dekorativer und funktioneller Überzüge auf Glas, Ton, Porzellan und dergleichen besonders nützlich sind, sind aus dem Stand der Technik bekannt. Diese Massen sind im allgemeinen in der Form von Siebdruckpasten oder Farben für Rollenauftrag verfügbar. Im allgemeinen setzen sich keramische Überzugsmassen aus einer Glasfritte, einem Bindemittel und gegebenenfalls einem Pigment zusammen. Üblicherweise wird die Überzugsmasse in Pastenform durch Siebdruck oder nach einem anderen Auftragsverfahren auf das Substrat aufgetragen und das überzogene Substrat erhitzt oder gebrannt, um die Fritte zu schmelzen und das Trägermaterial zu verflüchtigen, so daß der Überzug fest mit der Substratoberfläche verbunden wird.

Die Beschichtung von gebrannten Ton- und Keramikwaren mit Engobenähnlichen Farbpulvern ist in sofern problematisch, da die darin enthaltenden Effektpigmente zwar einen guten Farbeffekt aufweisen, aber die Haftung der Engobe bzw. Überzugsmasse auf Ton, z.B. einem Dachziegel, nicht ausreichend ist.

Es besteht daher ein Bedarf an farbigen Engoben mit hohem Glanz enthaltend Perlglanzpigmente, die nach dem Auftragsverfahren fest auf der Substratoberfläche fixiert werden und gleichzeitig zu einem dekorativen Überzug führen.

Überraschenderweise wurde nun gefunden, daß wenn man gebrannte oder ungebrannte Ziegel, Ton- und Keramikwaren mit einer Engobe-ähnlichen Farbe enthaltend eine Fritte im Brennbereich von 600-1200 °C und ein oder mehrere temperaturstabile Effektpigmente, beschichtet und nachfolgend bei Temperaturen von 600-1100 °C brennt, die Überzugsmasse sehr gut haftet und den Produkten einen Farbeffekt und einen hohen Glanz verleiht.

Gegenstand der Erfindung ist daher eine pigmentierte modifizierte Engobe für Ziegel, Ton- und Keramikwaren, dadurch gekennzeichnet, daß sie eine Fritte im Brennbereich von 600-1200 °C, und ein oder mehrere temperaturstabile Perlglanzpigmente enthält.

Für den Engobeschlicker werden Fritten im Brennbereich von 600-1200 °C verwendet, die frittenübliche Bestandteile, wie z.B. SiO₂, B₂O₃, TiO₂, ZrO₂, P₂O₅, Fe₂O₃, Al₂O₃, Alkalioxide und Erdalkalioxide, enthalten.

Geeignete Perlglanzpigmente müssen bis 1100 °C stabil sein und sind vorzugsweise mit ein oder mehreren Metalloxiden beschichtete plättchenförmige Substrate.

Bevorzugte plättchenförmige Substrate sind insbesondere Schichtsilikate und Oxide oder mit Oxiden beschichtete Materialien. Beispiele sind hierfür einerseits Glimmer, Talkum, Kaolin oder andere vergleichbare Mineralien, andererseits auch plättchenförmiges Eisenoxid sowie Glas-, SiO₂- oder Al₂O₃-Flakes. Als Effektpigmente eignen sich insbesondere Perlglanzpigmente auf Glimmerbasis. Perlglanzpigmente sind Glimmerplättchen mit einem Durchmesser von etwa 1-200 µm und einer Dicke von etwa 0,1 bis 5 µm, die mit einer Beschichtung von farbigen oder farblosen Metalloxiden, allein oder in Mischung, in einer einheitlichen Schicht oder in aufeinanderfolgenden Schichten (Multilayer-Pigmente) versehen sind.

Solche Pigmente sind in zahlreichen Patenten und Patentanmeldungen beschrieben, wie z.B. den deutschen Patentschriften 14 67 468, 19 59 998, 20 09 566, 21 06 613, 22 14 545, 22 15 191, 22 44 298, 23 13 331, 24 29 762, 25 22 572, 31 37 808, 31 37 809, 31 51 343, 31 51 354, 31 51 355, 32 11 602, 32 35 017 und EP 0 608 388 B1, und können nach den dort beschriebenen Verfahren hergestellt werden.

Insbesondere erfindungsgemäße modifizierte Engoben, die eisenoxidhaltige Perlglanzpigmente enthalten, verleihen den Produkten einen hohen Glanz und Farbigkeit. Besonders bevorzugt sind mit Eisenoxid (Fe₂O₃ und/oder Fe₃O₄) beschichtete Glimmer, Glas-, Al₂O₃- und/oder SiO₂-Plättchen.

Die erfindungsgemäße Engobe enthält 5 bis 70 Gew. %, vorzugsweise 10 bis 60 Gew. %, und insbesondere 15 bis 45 Gew. %, an Perlglanzpigmenten, wobei es sich auch um ein Gemisch verschiedener (zwei, drei oder mehr) Perlglanzpigmente handeln kann, bezogen auf die anorganischen Komponenten, d.h., bezogen auf die Fritte und die Perlglanzpigmente.

Der Fritte können weiterhin neben dem Perlglanzpigment anorganische Farbpigmente, wie z.B. farbige Metalloxide und/oder Metallhydroxide ausgewählt aus der Gruppe Co, Cr, Cu, Mn, Fe, Zr, V, Al, Ni, Si, Sb, Pr, Ca oder CdSSe (gekapselt) sowie deren Gemische, in Mengen von 0 bis 30 Gew. %, vorzugsweise 5 bis 20 Gew. %, und insbesondere 5 bis 15 Gew. %, bezogen auf die anorganischen Komponenten, zugesetzt werden.

Neben dem Perlglanzpigment kann der Engobeschlicker weiterhin ein Bindemittel in Mengen von 0 bis 70 Gew. %, vorzugsweise 10 bis 60 Gew. %, insbesondere 20 bis 50 Gew. %, enthalten. Die Auswahl des Bindemittels richtet sich nach den technologischen Anforderungen der zu erzeugenden Beschichtung. Geeignete Bindemittel sind insbesondere alle üblicherweise für Keramiken in Frage kommenden Bindemittel bzw. Bindemittelgemische, insbesondere ein Siebdruckmedium. Somit können Bindemittel auf der Basis von Cellulose, Polyethylengylcol, Cellulosennitrat, Alkylcellulose, Hydroxycellulose, Hydroxyalkylcelluloseether, Hydroxyalkylcellulose, Celluloseacetopropionat, -butyrat, Polyacrylat-, Polymethacrylat-, Polyester-, Polyphenol-, Harnstoff-, Melamin-, Polyterpen-, Polyvinyl-, Polyvinylchlorid-, Polyvinylpyrrolidon-Harzen, Polystyrol und modifiziertes Polystyrol, Polyalphamethylstyrol, Ester von hydriertem Kolophonium, Polyoefinen, Cumaroninden-, Kohlenwasserstoff-, Keton-, Aldehyd-, Aromaten-Formaldehyd-Harzen, Carbamidsäure-, Sulfonamid-, Epoxid-Harzen, Polyurethanen und/oder natürlichen Ölen oder Derivaten der genannten Substanzen eingesetzt werden. Weiterhin können übliche Lackbindemittel, wie z.B. Polyurethan-Acrylat-Harze, Acrylat-Melamin-Harze, Alkydharze, Polyesterharze, Polyurethane, Nitrocellulose, Ketonharze, Aldehydharze sowie Polyvinylbutyral, Acrylatharze oder Epoxidharze sowie deren Gemische als Bindemittel eingesetzt werden.

Die Applikation kann aber auch ohne ein Bindemittel, z.B. staubförmig, aufgetragen werden. In diesem Fall werden Perlglanzpigment und Frittepulver trocken gemischt und aufgetragen, z.B. durch Aufstreuen.

Die Lösemittelkomponente im Engobeschlicker muß auf das jeweilige Bindemittel fachgemäß abgestimmt werden, soweit ein Lösemittel benötigt wird. Bei der Herstellung können Wasser sowie alle organischen Lösemittel, vorzugsweise solche die mit Wasser emulgierbar oder mischbar sind, eingesetzt werden. Geeignete Lösemittel sind solche, die bisher auf dem Sektor der keramischen Überzugsmassen verwendet wurden, wie Pineöl, Terpineol, Esteralkohol, Toluole, Benzine, Mineralöle, aliphatische oder aromatische Kohlenwasserstoffe, Ester, pflanzliche Öle, aliphatische Alkohole, wie solche mit 2 bis 4 Kohlenstoffatomen, z.B. Ethanol, Butanol, Esteralkohole, Tridecylalkohol, Isopropanol oder Ketone, z.B. Aceton oder Methylethylketon, Glykol oder Glykolether, wie z.B. Tripropylenglykolmethylether, Propylenglycolmonoethylether oder Diole, wie z.B. Ethylenglykol und Propylenglykol oder Polyetherdiole, wie z.B. Polyethylenglykol und Polypropylenglykol oder Polyole, wie z.B. alipathische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 8. Auflage 1987, aufgelistet sind. Insbesondere werden solche Lösemittel verwendet, die mit Wasser unbeschränkt mischbar sind.

Die erfindungsgemäße Pigmentpräparation enthält 0 bis 90 Gew. % Wasser und/oder eines organischen Lösemittels bzw. Lösemittelgemisches, vorzugsweise 5 bis 80 Gew. %, insbesondere 20 bis 70 Gew. %, bezogen auf den Engobeschlicker.

Als zusätzlichen weiteren Bestandteil kann der Engobeschlicker bis zu 15 Gew. %, vorzugsweise 0,1 bis 5 Gew. %, eines oder mehrerer Viskositätsmodifizierer enthalten. Solche Modifizierer sind ebenfalls aus dem Stand der Technik bekannt und Beispiele dafür bilden Ethylcellulose, Nitrocellulose, Hydroxypropylcellulose, Hydroxypropylmethylcellulose, Acrylharze, Poly(vinyl)butyralharze, Carboxymethylcellulose und Ethylhydroxyethylcellulose.

Der Engobeschlicker kann auch weitere modifizierende Bestandteile enthalten, wie z.B. Dispergiermittel, Benetzungsmittel, Antiabsetzmittel, Verlaufshilfsmittel, etc..

Der Engobeschlicker enthaltend die Fritte, gegebenenfalls weitere Additive, Farbmittel bzw. Farbpigmente, wird auf eine Mahlfeinheit von 0,1-300 µm, vorzugsweise 10-20 µm vermahlen, vorzugsweise naß vermahlen. Zuletzt wird das Perlglanzpigment untergemischt.

Der fertige Engobeschlicker kann nach den üblichen Auftragsverfahren wie Spritzen, Pinseln, Fluten oder Tauchen auf Ziegel, Ton- oder Keramikoberflächen aufgetragen werden. Der Auftrag kann auf gebrannte oder ungebrannte Ziegel, gebrannte oder ungebrannte Ton- und Keramikwaren erfolgen. Vorzugsweise werden ungebrannte Produkte mit dem Engobeschlicker versehen. Anschließend wird der aufgetragene Engobeschlicker getrocknet, vorzugsweise 0,5-5 h bei 50-200 °C. Zuletzt wird das beschichtete Produkt für mehrere Stunden, vorzugsweise 2-48 h bei 400-1200 °C, gebrannt.

Die modifizierte Engobe dient zur Beschichtung von Tonwaren, z.B. ungebrannten Dachziegeln und Keramiken, wie z.B. Fliesen. Gegenstand der Erfindung ist somit auch die Verwendung der modifizierten Engobe für die Farbgebung von Ziegeln, Ton- und Keramikwaren.

Die nachfolgenden Beispiele sollen die Erfindung verdeutlichen, wobei die Beispiele rein veranschaulichender Art und für die Erfindung nicht erschöpfend sind.

### Beispiel 1

| | |
|---|---|
| 2 g | Iriodin® 507 (mit Fe₂O₃ beschichtetes Glimmerpigment der Teilchengröße 10 bis 60 µm der Fa. Merck KGaA) (Pigmentierung 20 Gew. % bezogen auf die keramische Anteile) |
| 8 g | Cerdec Fluß 10034 (Fa. Cerdec AG) (50 Gew. % in Cerdec Siebdruckmedium 80683 vermahlen) |
| 8 g | 14116 Schwarz (Metalloxidgemisch der Fa. Hans Wolbring) (50 Gew. % in Cerdec Siebdruckmedium 80683 vermahlen) |
| 30 g | Siebdruckmedium 80683 bestehend aus Hydroxypropylcelluloseether, 2-(2-Ethoxyethoxy)ethanol, Ethanol (Fa. Cerdec AG) |
| 15 g | VE-Wasser |
| 15 g | Isopropanol |

Die Farben werden mit den einzelnen Komponenten homogen gemischt. Der Auftrag der pigmentierten Fritten auf ungebrannte Ton-Dachziegel erfolgt durch Spritzen. Zuletzt werden die getrockneten Ziegel im Naberofen gebrannt:
- 25-400 °C in: 4 h
- 400 °C: 1 h
- 400-1050 °C: 2 h
- 1050 °C: 6 h
- 1050-250 °C: ca. 10-15 h

Die gebrannten Dachziegel weisen eine glänzende schwarz-grüne Farbe auf.

### Beispiel 2

| | |
|---|---|
| 4 g | Iriodin® 502 (mit Fe₂O₃ beschichtetes Glimmerpigment der Teilchengröße 10 bis 60 µm der Fa. Merck KGaA) |
| 12 g | Cerdec Fluß 10034 (50 Gew. % in Cerdec Siebdruckmedium 80683 vermahlen) |
| 30 g | Siebdruckmedium 80683 |
| 15 g | VE-Wasser |
| 15 g | Isopropanol |

Die Farben werden mit den einzelnen Komponenten homogen gemischt. Der Auftrag der pigmentierten Fritten auf ungebrannte Ton-Dachziegel erfolgt durch Spritzen. Zuletzt werden die getrockneten Ziegel im Naberofen gebrannt:
- 25-400 °C in: 4 h
- 400 °C: 1 h
- 400-1050 °C: 2 h
- 1050 °C: 6 h
- 1050-250 °C: ca. 10-15 h

Die gebrannten Dachziegel weisen eine rot-bronzene Farbe auf.

## Patentansprüche

1. Modifizierte Engobe für Ziegel, Ton- und Keramikwaren, dadurch gekennzeichnet, daß sie eine Fritte im Brennbereich von 600-1200 °C und ein oder mehrere temperaturstabile Perlglanzpigmente enthält.

2. Modifizierte Engobe nach Anspruch 1, dadurch gekennzeichnet, daß der Anteil an Perlglanzpigment 5-70 Gew. % beträgt.

3. Modifizierte Engobe nach Anspruch 1 oder 2, dadurch gekennzeichnet, daß sie zusätzlich ein anorganisches Farbmittel enthält.

4. Modifizierte Engobe nach einem der Ansprüche 1 bis 3, dadurch gekennzeichnet, daß das Perlglanzpigment ein mit ein oder mehreren Metalloxiden beschichtetes plättchenförmiges Substrat ist.

5. Modifizierte Engobe nach einem der Ansprüche 1 bis 4, dadurch gekennzeichnet, daß das Perlglanzpigment ein mit Fe₂O₃ oder Fe₃O₄ beschichtetes Glimmer-, Glas-, Al₂O₃- oder SiO₂-Plättchen ist.

6. Verwendung der modifizierten Engobe nach einem der Ansprüche 1 bis 5 zur Farbgebung von ungebrannten oder gebrannten Ziegeln, ungebrannten oder gebrannten Ton- und Keramikwaren.
